# NOUVEAU FASCICULE DE BREVET EUROPEEN

(11) **EP 2 805 133 B2**
(45) Date de publication et mention de la décision concernant l'opposition: **13.09.2023**
(45) Mention de la délivrance du brevet: 22.11.2017
(21) Numéro de dépôt: 13705211.4
(22) Date de dépôt: 14.01.2013
(51) Int. Cl.: G01C 19/66, G02B 6/28, G02B 6/125, G01C 19/72

(54) **ROUTEUR OPTIQUE GUIDE, INTERFEROMETRE A FIBRE OPTIQUE INTEGRANT UN TEL ROUTEUR OPTIQUE ET PROCEDE DE ROUTAGE OPTIQUE GUIDE**
GEFÜHRTER OPTISCHE ROUTER, FASEROPTISCHES INTERFEROMETER MIT EINEM SOLCHEN OPTISCHER ROUTER UND VERFAHREN FÜR GEFÜHRTES OPTISCHES ROUTING
GUIDED OPTICAL ROUTER, FIBRE-OPTIC INTERFEROMETER INTEGRATING SUCH AN OPTICAL ROUTER AND METHOD OF GUIDED OPTICAL ROUTING

(30) Priorité: 16.01.2012 FR 1250413
(43) Date de publication de la demande: 26.11.2014
(73) Titulaire: IXBLUE, 78100 Saint-Germain-en-Laye (FR)
(72) Inventeur: LEFEVRE, Hervé, F-75007 Paris (FR)
(74) Mandataire: Jacobacci Coralis Harle
(86) Numéro de dépôt international: PCT/FR2013/050085
(87) Numéro de publication internationale: WO 2013/107974

(56) Documents cités:
- US-A- 4 653 917
- US-B1- 7 333 690
- GANGULY P ET AL: "A three-waveguide polarization independent power splitter on lithium niobate substrate", OPTICS COMMUNICATIONS, NORTH-HOLLAND PUBLISHING CO. AMSTERDAM, NL, vol. 168, no. 5-6, 15 septembre 1999 (1999-09-15), pages 349-354, XP004180306, ISSN: 0030-4018, DOI: 10.1016/S0030-4018(99)00368-5
- DE A. TAKAGI et al.: "Design and Fabrication of Silica-Based Waveguide-Type (3 x 3) Directional Couplers with two Identical Outer Waveguides", Jpn. J. Appl. Phys., vol. 31, no. 5B, May 1992 (1992-05), pages 1618-1627,

## Description

La présente invention concerne un interféromètre en anneau de Sagnac à fibre optique comprenant un routeur optique bidirectionnel guidé 50-50 pour diviser un faisceau optique incident en deux faisceaux optiques guidés de même puissance dans un sens de propagation, et pour combiner deux faisceaux optiques guidés en un faisceau optique guidé dans le sens inverse de propagation. L'invention concerne également un gyroscope à fibre optique comprenant un tel routeur optique guidé. L'invention concerne aussi un procédé de routage optique réciproque et à faibles pertes, notamment dans une application à un gyroscope à fibre optique.

On utilise couramment un séparateur optique pour diviser un faisceau optique en deux faisceaux de même puissance, par exemple dans un interféromètre à division d'amplitude ou dans un routeur optique de télécommunications. Un séparateur optique 50-50, aussi appelé séparateur à -3dB, permet de diviser un faisceau optique en deux faisceaux secondaires de même puissance. En sens inverse, on utilise aussi un séparateur optique 50-50 pour combiner en amplitude deux faisceaux optiques provenant des deux branches d'un interféromètre, comme par exemple des deux extrémités d'un gyroscope à fibre optique. Dans la plupart des applications, il est essentiel que le séparateur optique assure une répartition à 50-50 de la puissance incidente indépendamment de la longueur d'onde des faisceaux ainsi que de l'environnement et en particulier de la température.

On connaît différents types de séparateurs optiques tels qu'une lame semi-réfléchissante en optique classique, une jonction Y en optique fibrée ou en optique intégrée, ou encore un coupleur par champ évanescent à deux fois deux portes (i.e. à deux portes d'entrée et deux portes de sortie ou coupleur 2x2) en optique fibrée ou en optique intégrée. Nous allons passer en revue les propriétés des différents séparateurs/combineurs de faisceaux connus et tout particulièrement les séparateurs 50-50.

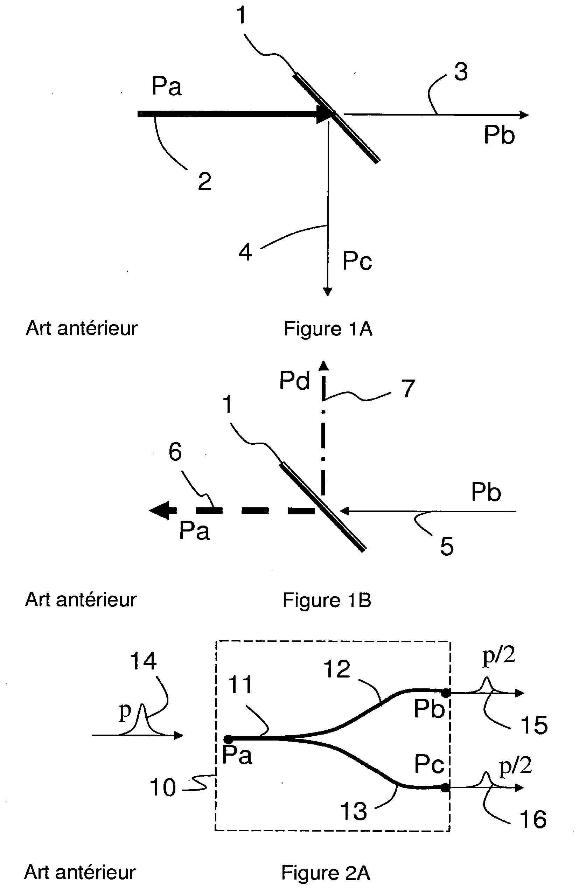

En optique classique, une lame semi-réfléchissante permet de diviser spatialement un faisceau optique incident en deux faisceaux optiques ayant chacun 50% de la puissance du faisceau incident. La figure 1A représente schématiquement une lame semi-transparente en optique classique. La lame 1 reçoit sur une porte Pa un faisceau incident 2. La lame semi-réfléchissante 1 divise le faisceau incident 2 en un premier faisceau secondaire 3 sur une porte Pb et un deuxième faisceau secondaire 4 sur une porte Pc. Par conservation d'énergie, toute la puissance du faisceau 2 est répartie entre le faisceau 3 et le faisceau 4. Avantageusement, la lame 1 est sélectionnée de manière à ce que les faisceaux secondaires 3 et 4 aient la même puissance. La figure 1B représente la même lame semi-transparente 1 fonctionnant en sens inverse. La lame 1 reçoit sur la porte Pb un faisceau 5. La lame 1 divise le faisceau 5 en un premier faisceau secondaire 6 sur la porte Pa et un deuxième faisceau secondaire 7 sur une quatrième porte Pd. Par conservation d'énergie, toute la puissance du faisceau 5 est répartie entre le faisceau 6 et le faisceau 7. Par réciprocité, la puissance qui va de la porte Pa vers la porte Pb sur la figure 1A est identique à la puissance qui va de la porte Pb vers la porte Pa sur la figure 1B. On comprend aisément que la lame semi-transparente fonctionne de manière analogue quelle que soit la porte d'entrée sur laquelle est incident un faisceau lumineux. La lame semi-réfléchissante 1 constitue donc un routeur optique à quatre portes, plus précisément un routeur optique à deux portes d'entrée et deux portes de sortie.

La fonction de séparation de faisceau à 50-50 en puissance peut aussi être réalisée en optique guidée par un circuit optique intégré (COI) ou par un composant à fibre optique.

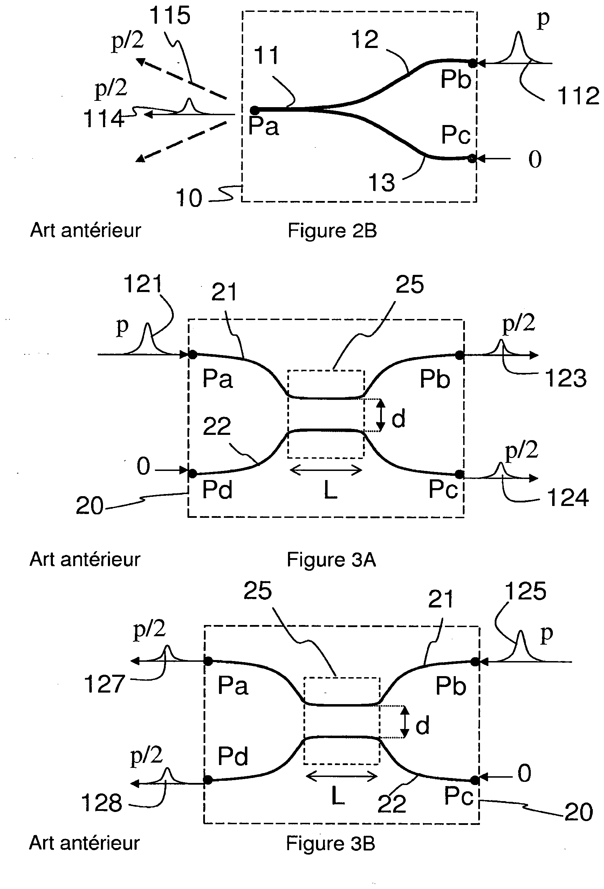

On connaît par exemple un circuit optique intégré à division d'amplitude comprenant un guide d'onde monomode en forme de jonction Y (cf. figure 2A). La jonction 10 comprend une branche commune 11 reliée à une première branche secondaire 12 et à une deuxième branche secondaire 13. Un circuit optique intégré étant fabriqué par des techniques de micro lithographie, une jonction 10 en forme de Y sur un circuit optique intégré est parfaitement symétrique. Un faisceau optique monomode 14 de puissance p incident sur la porte Pa se propage sur la branche commune 11 du guide d'onde monomode. La jonction Y divise le faisceau optique monomode 14 en deux faisceaux secondaires monomodes 15 et 16 se propageant respectivement sur les branches secondaires 12 et 13 du guide d'onde monomode. Par symétrie, chaque faisceau secondaire 15, 16 reçoit 50% de la puissance du faisceau incident 14. On récupère ainsi une puissance p/2 sur la porte Pb et une puissance p/2 sur la porte Pc. La figure 2B représente la jonction Y de la figure 2A fonctionnant dans le sens inverse de propagation. Un faisceau 112 de puissance p est couplé sur la porte Pb tandis qu'une puissance nulle est sur la porte Pc. La jonction Y transmet un faisceau optique guidé 114 sur la branche commune. Toutefois, le guide d'onde étant monomode, un seul mode est guidé sur la branche commune 11 de la jonction Y. Par conservation d'énergie, toute la puissance du faisceau 112 est répartie entre un faisceau guidé 114 et un faisceau 115 non guidé. Par réciprocité, la puissance qui va de la porte Pa vers la porte Pb sur la figure 2A est identique à la puissance qui va de la porte Pb vers la porte Pa sur la figure 2B. Le faisceau optique guidé 114 présente une puissance moitié (p/2) de la puissance du faisceau incident 112. Il est connu qu'un mode antisymétrique 115 de puissance égale à p/2 se propage de manière non guidée dans le substrat (Arditty et al., « Reciprocity properties of a branching waveguide », Fiber-Optic Rotation Sensors, Springer series in optical sciences, Vol. 32, 1982, pp. 102-110). Il existe ainsi une quatrième porte non guidée formée par ce mode antisymétrique d'ordre supérieur. Une partie de ce mode non guidé est susceptible d'être collectée par une fibre optique couplée à la branche commune 11 du guide d'onde. Le signal détecté sur la porte Pa peut ainsi être perturbé par le mode non guidé. La jonction Y est aussi un routeur optique à quatre portes, mais avec uniquement trois portes guidées. De par sa symétrie, une jonction Y est stable en longueur d'onde et thermiquement.

Sur les figures 3A et 3B, on a représenté un autre type de routeur optique 50-50 reposant sur le principe du couplage optique par champ évanescent. Le couplage par champ évanescent consiste à rapprocher les coeurs de deux guides d'onde monomodes 21, 22 dans une zone d'interaction 25 de longueur L suivant une direction longitudinale parallèle à l'axe des guides d'onde 21, 22. La distance d entre les centres des deux guides d'onde dans la zone d'interaction 25 est telle que le mode fondamental se propageant dans le coeur d'un guide d'onde monomode est couplé par recouvrement de l'onde évanescente dans le guide d'onde monomode adjacent. Sur la figure 3A, dans le sens direct, un faisceau monomode guidé 121 de puissance p est couplé sur la porte Pa tandis qu'une puissance nulle est sur la porte Pd. Par couplage évanescent, le coupleur 20 divise le faisceau 121 en un premier faisceau secondaire 123 monomode guidé sur la porte Pb et un deuxième faisceau secondaire 124 monomode guidé sur la porte Pc. Afin d'assurer une division 50-50, la longueur d'interaction de la zone de couplage est généralement ajustée de telle manière que la moitié de la puissance du faisceau incident est distribuée sur chacun des deux guides d'onde de sortie, la puissance sur la porte Pb étant égale à p/2 de même que la puissance sur la porte Pc. La figure 3B représente le même coupleur par champ évanescent 20 que sur la figure 3A fonctionnant maintenant dans le sens opposé au sens direct de propagation. Un faisceau 125 monomode guidé de puissance p est incident sur la porte Pb. Par conservation d'énergie, toute la puissance du faisceau 125 est répartie entre un premier faisceau 127 monomode guidé de puissance p/2 sur la porte Pa et un deuxième faisceau 128 monomode guidé de puissance p/2 sur la porte Pd. Par réciprocité, la puissance qui va de la porte Pa vers la porte Pb sur la figure 3A est identique à la puissance qui va de la porte Pb vers la porte Pa sur la figure 3B. Un coupleur 2x2 par champ évanescent est aussi un routeur optique à quatre portes, avec quatre portes guidées. Comparé à une jonction Y, un coupleur 2x2 par champ évanescent a donc l'avantage de guider les faisceaux sur quatre portes.

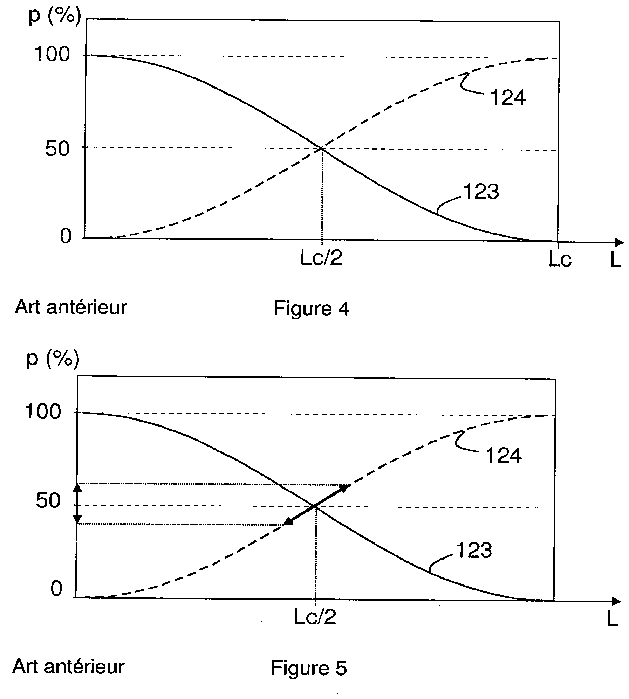

La figure 4 représente les courbes de couplage d'un coupleur par champ évanescent 2x2 tel que représenté sur la figure 3A dans le sens direct. La courbe en tirets 124 représente la puissance couplée sur la porte Pc en fonction de la longueur L de la zone de couplage évanescent 25. La courbe en trait plein 123 représente la puissance restante sur la porte Pb en fonction de la longueur L. La puissance couplée depuis la porte Pa vers la porte Pc (courbe du faisceau 124) suit une loi en sin² en fonction de la longueur d'interaction L. Par conservation d'énergie, la puissance restante sur la porte Pb (courbe du faisceau 123) suit une loi en cos². Au bout d'une longueur dite longueur de couplage, notée Lc, toute la puissance d'un faisceau optique incident injecté sur la première porte Pa du premier guide d'onde 21 est entièrement couplée dans le deuxième guide d'onde 22, ce qui correspond au maximum de la courbe de puissance de couplage 124 (cf. figure 3). Pour cette longueur Lc, la puissance sur la porte Pb est nulle.

Afin de réaliser un coupleur 2x2 et 50-50 par champ évanescent en optique guidée ou fibrée, la longueur d'interaction L de la zone de couplage évanescent est ajustée à Lc/2, de manière à ce que la moitié de la puissance incidente soit transmise sur la porte Pb et l'autre moitié couplée sur la porte Pc. La figure 5 indique le point de fonctionnement à Lc/2 d'un coupleur à champ évanescent 2x2 et 50-50. On observe que ce point de fonctionnement correspond à une pente maximum des courbes de puissance 123 et 124. Une variation de longueur d'onde du faisceau ou des conditions environnantes, produit une variation de la force de couplage, donc de Lc qui engendre une forte variation de la puissance transmise sur la porte Pb et couplée sur la porte Pc. En particulier, toute perturbation induit un écart par rapport au point de fonctionnement à Lc/2, d'où un déséquilibre entre la puissance transmise sur la porte Pb et couplée sur la porte Pc (représenté schématiquement par une flèche sur la figure 5). Un coupleur 2x2 et 50-50 par champ évanescent ne présente donc pas une bonne stabilité, notamment en longueur d'onde.

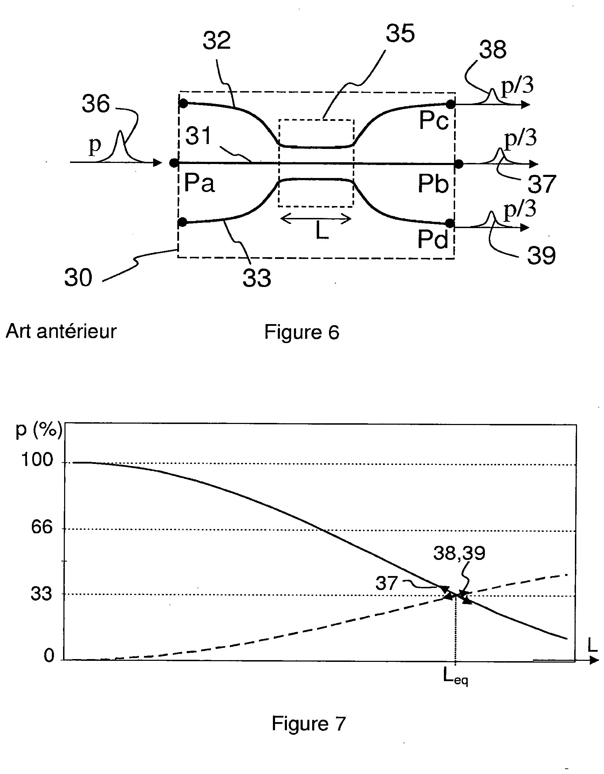

Sur le même principe de couplage par champ évanescent, on connaît aussi un coupleur optique 30 à trois portes d'entrée et trois portes de sortie (ou coupleur 3x3) sur fibres optiques, dans lequel les coeurs de trois fibres optiques sont rapprochés par fusion-étirage, de manière à ce que les coeurs des trois fibres s'étendent parallèlement dans une même gaine sur une zone de couplage 35 (cf. Figure 6). Un coupleur optique 3x3 par champ évanescent 30 est généralement ajusté (lors de la fusion-étirage la distance entre fibres diminue simultanément avec l'augmentation de la longueur d'interaction) de manière à ce qu'un faisceau 36 de puissance p entrant sur une porte d'entrée Pa soit équi-réparti en trois faisceaux 37, 38, 39 ayant une puissance identique (respectivement p/3, p/3, p/3) sur chacune des trois portes de sortie Pb, Pc, Pd. La figure 7 représente les courbes de couplage d'un routeur 1/3, 1/3, 1/3. Pour une longueur L de la zone de couplage évanescent égale à L_{eq} la puissance sur la porte Pb est égale à la puissance sur les portes Pc et Pd, et égale à un tiers de la puissance incidente sur la porte Pa. Toutefois, comme dans le cas d'un coupleur 2x2, le point de fonctionnement à 1/3 sur les courbes de couplage correspond à une pente élevée. Ce point de fonctionnement est donc sensible à des variations de longueur d'onde et/ou de température. Un routeur équi-réparti 1/3, 1/3, 1/3 est donc peu stable notamment en longueur d'onde.

On connaît aussi un circuit optique intégré planaire comprenant un coupleur à champ évanescent 3x3 comprenant trois guides d'onde parallèles sur une zone de couplage 35 par champ évanescent. Un signal d'entrée 36 de puissance p sur la porte Pa du guide d'onde central 31 est réparti en énergie de manière équilibrée sur les trois portes de sortie Pb, Pc, Pd avec une même puissance (respectivement p/3, p/3, p/3). Ces coupleurs 3x3 à 1/3-1/3-1/3 ont des propriétés de déphasage intéressantes qui les rendent utiles dans des applications de gyroscope à fibre optique (cf. S.K. Sheem « Fiber-Optic Gyroscope With [3x3] Directionnel Coupler » Applied Physics Letters, Vol. 37, 1980, pp. 869-871). Le document US 4,653,917 décrit aussi un coupleur à champ évanescent 3x3 configuré pour diviser un faisceau incident en trois faisceaux d'égale puissance.

Le document P. Ganguly, J.C. Biswas, S. Das, S.K. Lahiri « A three waveguide polarization independant power splitter on lithium niobate substrate», Optics Comm. 168 (1999) 349-354, décrit un diviseur de puissance sur un circuit intégré optique comportant un guide d'onde monomode d'entrée et deux guides d'onde monomodes de sortie disposés de part et d'autre du guide d'onde d'entrée dans une zone de couplage par champ évanescent. La longueur L de la zone de couplage est adaptée pour diviser un faisceau optique se propageant sur le guide d'onde central en deux faisceaux optiques de même puissance se propageant sur les deux guides d'onde latéraux de sortie. Ce diviseur de puissance fonctionne de manière analogue à une jonction Y.

En résumé, une jonction Y a l'avantage, de par sa symétrie, d'être stable en longueur d'onde et en température mais a l'inconvénient de présenter une quatrième porte non guidée. Un coupleur par champ évanescent 2x2 a l'avantage de guider toutes les portes, mais a l'inconvénient d'être peu stable notamment en longueur d'onde. Un coupleur 3x3 équi-réparti (1/3, 1/3, 1/3) a l'avantage de guider toutes les portes, mais présente l'inconvénient d'être peu stable, notamment en longueur d'onde. De plus, un coupleur 3x3 équi-réparti a l'inconvénient d'induire une perte d'un tiers de la puissance d'entrée. Le document US 4,653,917 décrit un gyroscope optique comprenant un coupleur 3x3 en entrée.Le document intitulé "A three-waveguide polarization independent power splitter on lithium niobate substrate" par Ganguly et al. Optics Communications 168 (1999) 349-354 décrit les équations de répartition de puissance des coupleurs optiques 3x3. Un des buts de l'invention est de proposer un routeur optique 50-50 à la fois stable en longueur d'onde et dont toutes les portes d'entrée sortie soient guidées. Un autre but de l'invention est de minimiser les pertes.

La présente invention a pour but de remédier aux inconvénients des techniques antérieures et concerne plus particulièrement un interféromètre selon la revendication 1.

Selon l'invention, la zone de couplage optique par champ évanescent du coupleur optique à champ évanescent 3x3 a une longueur de couplage L comprise entre 1,3154 x L_{eq} et 2 x L_{eq} où L_{eq} représente la longueur de couplage équi-réparti en puissance pour un coupleur optique de référence à champ évanescent à trois portes d'entrée et trois portes de sorties, ayant les mêmes distances entre guides d'onde et dans les mêmes conditions de longueur d'onde des faisceaux et de température, de manière à ce que pour ladite longueur de couplage L (comprise entre 1,3154 x L_{eq} et 2 x L_{eq}) un faisceau optique couplé sur la première porte d'entrée ayant une puissance p et se propageant sur le premier guide d'onde central dans le sens direct est divisé en un premier faisceau secondaire ayant une puissance supérieure ou égale à 90% de p/2 sur la deuxième porte de sortie et un autre faisceau secondaire ayant une même puissance supérieure ou égale à 90% de p/2 sur la troisième porte de sortie, et lesdits premier, deuxième et troisième guides d'onde s'éloignent les uns des autres en dehors de la zone de couplage optique entre chacune des portes d'entrée et la zone de couplage optique et respectivement entre la zone de couplage optique et chacune des portes de sortie, lesdits premier, deuxième et troisième guides d'onde étant adptés pour collecter et guider sur des guides d'onde séparés des faisceaux optiques en mode symétrique et en mode antisymétrique se propageant dans le sens direct entre la zone de couplage optique et chacune des portes de sortie et, respectivement, pour collecter et guider sur des guides d'onde séparés des faisceaux optiques en mode symétrique et en mode antisymétrique se propageant dans le sens inverse entre la zone de couplage optique et chacune des portes de sortie.

Chacune desdites trois portes d'entrée et trois portes de sortie est ainsi reliée respectivement à un guide d'onde optique distinct apte à guider un faisceau optique de ladite porte d'entrée ou respectivement de ladite porte de sortie vers la zone de couplage par champ évanescent et réciproquément à guider un faisceau optique issu de la zone de couplage vers ladite porte d'entrée ou respectivement ladite porte de sortie.

Un coupleur à champ évanescent 3x3 de référence est dit équi-réparti en puissance de sortie, lorsqu'un faisceau incident de puissance p sur la porte d'entrée Pa du coupleur équi-réparti est divisé en trois faisceaux secondaires de même puissance p/3 sur les trois portes de sortie respectivement Pb, Pc et Pd.

Selon un mode de réalisation particulier, la zone de couplage optique par champ évanescent du coupleur optique à champ évanescent 3x3 a une longueur de couplage L comprise entre 1,55 x L_{eq} et 1.74 x L_{eq} de manière à ce que, pour ladite longueur de couplage L, un faisceau optique couplé sur la première porte d'entrée ayant une puissance p et se propageant sur le premier guide d'onde central dans le sens direct soit divisé en un premier faisceau secondaire ayant une puissance supérieure ou égale à 99% de p/2 sur la deuxième porte de sortie et un autre faisceau secondaire ayant une même puissance supérieure ou égale à 99% de p/2 sur la troisième porte de sortie.

Selon un aspect particulièrement avantageux de l'invention, la longueur de couplage L est égale à 1,6443 x L_{eq}.

Selon un mode de réalisation préféré de l'invention, ledit routeur optique guidé comprend un circuit optique intégré sur un substrat planaire, lesdits premier, deuxième et troisième guides d'onde s'étendant dans un plan parallèle audit substrat planaire, le premier guide d'onde central étant situé à équidistance du deuxième et du troisième guide d'onde latéral dans la zone de couplage optique par champ évanescent.

Selon un autre mode de réalisation de l'invention lesdits premier, deuxième et troisième guides d'onde sont des guides d'onde à fibre optique, ladite zone de couplage optique par champ évanescent étant une zone de fusion-étirage desdits premier, deuxième et troisième guides d'onde, lesdits premier, deuxième et troisième guides d'onde étant situés mutuellement à équidistance dans la zone de couplage optique par champ évanescent.

Selon un mode de réalisation préféré, l'interféromètre en anneau de Sagnac comporte en outre un deuxième routeur optique guidé selon l'un des modes de réalisation décrits, le deuxième routeur optique guidé étant disposé en série entre la source, le détecteur et le premier routeur optique guidé, le guide d'onde central du premier routeur optique guidé étant relié optiquement au guide d'onde central du deuxième routeur optique guidé.

Avantageusement, au moins une des deux entrées secondaires du premier routeur optique est reliée à des moyens de détection optique aptes à détecter au moins un faisceau optique secondaire retour.

L'invention propose également un procédé de routage optique selon la revendication 3.

L'invention trouvera une application particulièrement avantageuse dans un interféromètre en anneau de Sagnac à fibre optique utilisé dans un gyroscope à fibre optique ou encore comme capteur de courant électrique ou de champ magnétique par effet Faraday.

La présente invention concerne également les caractéristiques qui ressortiront au cours de la description qui va suivre et qui devront être considérées isolément ou selon toutes leurs combinaisons techniquement possibles.

L'invention sera mieux comprise et d'autres buts, détails, caractéristiques et avantages de celle-ci apparaîtront plus clairement au cours de la description d'un (des) mode(s) de réalisation particulier(s) de l'invention donné(s) uniquement à titre illustratif et non limitatif en référence aux dessins annexés. Sur ces dessins :
- les figures 1A-1B représentent schématiquement le fonctionnement d'une lame séparatrice en sens direct (Fig. 1A) et en sens opposé (Fig. 1B) ;
- les figures 2A-2B représentent schématiquement un séparateur à jonction Y en sens direct (Fig. 2A) et en sens opposé (Fig. 2B) ;
- les figures 3A-3B représentent schématiquement un coupleur par champ évanescent 2x2 et 50-50 selon l'art antérieur en sens direct (Fig. 3A) et en sens opposé (Fig. 3B) ;
- la figure 4 représente schématiquement des courbes de couplage d'un coupleur par champ évanescent 2x2 selon l'art antérieur ;
- la figure 5 représente le point de fonctionnement d'un coupleur par champ évanescent 2x2 et 50-50 ;
- la figure 6 représente schématiquement un routeur équi-réparti 1/3-1/3-1/3 à coupleur par champ évanescent 3x3 selon l'art antérieur ;
- la figure 7 représente le point de fonctionnement d'un routeur 1/3-1/3-1/3 à couplage par champ évanescent 3x3 ;
- la figure 8 représente un routeur 50-50 comprenant un coupleur par champ évanescent 3x3 selon un mode de réalisation préféré de l'invention ;
- la figure 9 représente schématiquement les courbes de couplage du routeur 50-50 selon l'invention ;
- les figures 10A, 10B, 10C et 10D représentent schématiquement la propagation de différents faisceaux dans un routeur optique selon un mode de réalisation de l'invention ;
- la figure 11 représente schématiquement un gyroscope à fibre optique selon un mode de réalisation préféré de l'invention.

L'invention repose sur l'utilisation d'un coupleur à champ évanescent 3x3 comprenant trois guides d'onde monomodes 31, 32, 33 adjacents sur une zone de couplage 35 par champ évanescent. Toutefois, ce coupleur 40 à champ évanescent 3x3 est configuré de manière différente d'un coupleur 30 de l'art antérieur tel que décrit en lien avec la figure 6.

Le coupleur 40 à champ évanescent 3x3 de l'invention est aussi configuré différemment du coupleur-diviseur de puissance décrit dans le document P. Ganguly, J.C. Biswas, S. Das, S.K. Lahiri « A three waveguide polarization independant power splitter on lithium niobate subsrate », Optics Comm. 168 (1999) 349-354. Dans ce document, le guide d'onde monomode central se termine à une extrémité d'une zone de couplage et les deux guides d'onde monomodes latéraux se terminent à l'autre extrémité de la zone de couplage par champ évanescent. Dans le sens direct de propagation, ce composant fonctionne comme une jonction Y en divisant un faisceau guidé se propageant sur le guide d'onde central en deux faisceaux guidés se propageant sur les guides d'onde latéraux. Dans le sens de propagation inverse, ce composant fonctionne aussi comme une jonction Y : deux faisceaux se propageant respectivement sur les deux guides d'onde latéraux vers la zone de couplage se combinent pour former un faisceau de mode symétrique guidé sur le guide d'onde central et un faisceau de mode antisymétrique se propageant de manière non guidée dans le substrat.

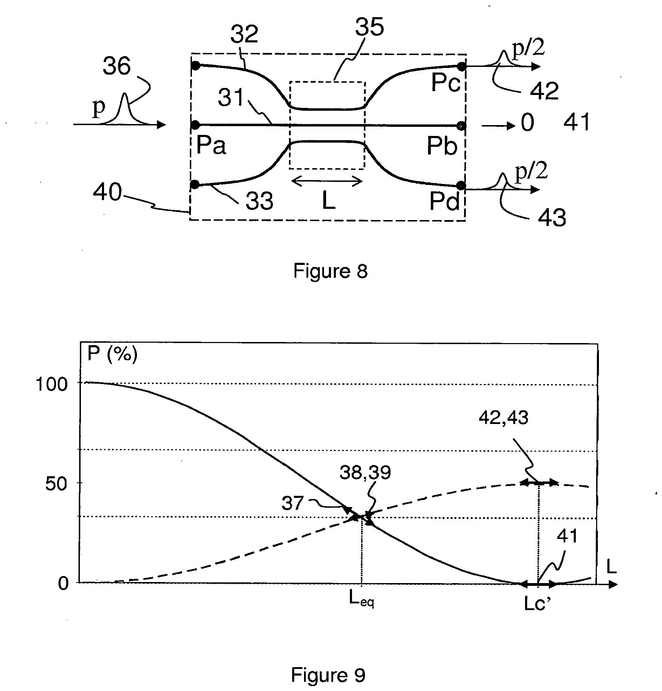

Nous allons tout d'abord présenter un circuit intégré optique comprenant le routeur optique 50-50 selon un premier mode de réalisation de l'invention, en lien avec la figure 8. Le circuit intégré optique comprend un coupleur 3 x 3, comprenant une zone de couplage 35 par champ évanescent dans laquelle trois guides d'onde monomodes 31, 32, 33 sont disposés de préférence parallèlement. Deux guides d'onde latéraux 32, 33 sont disposés de manière symétrique par rapport à un guide d'onde central 31. La distance d entre le guide d'onde central 31 et chacun des guides d'onde latéraux 32, 33 est de préférence constante sur toute la zone de couplage 35, c'est-à-dire sur une longueur L. La distance entre les guides d'onde 31, 32, 33 et la longueur de la zone de couplage 35 par champ évanescent sont déterminées et ajustées précisément pour permettre le fonctionnement du coupleur optique 40. Dans un mode de réalisation, le guide d'onde est fabriqué par échange protonique sur un substrat de niobate de lithium, la longueur d'onde du faisceau incident est égale à 1530 nm, la longueur d'interaction L est égale à 4mm, la largeur d'un guide d'onde est égale à 6 µm, l'indice de réfraction du guide d'onde est égal à 2,15 et la distance d entre le centre du guide d'onde central 31 et le centre de l'un quelconque des guide d'onde latéraux 32 ou 33 est égale à environ 14 µm.

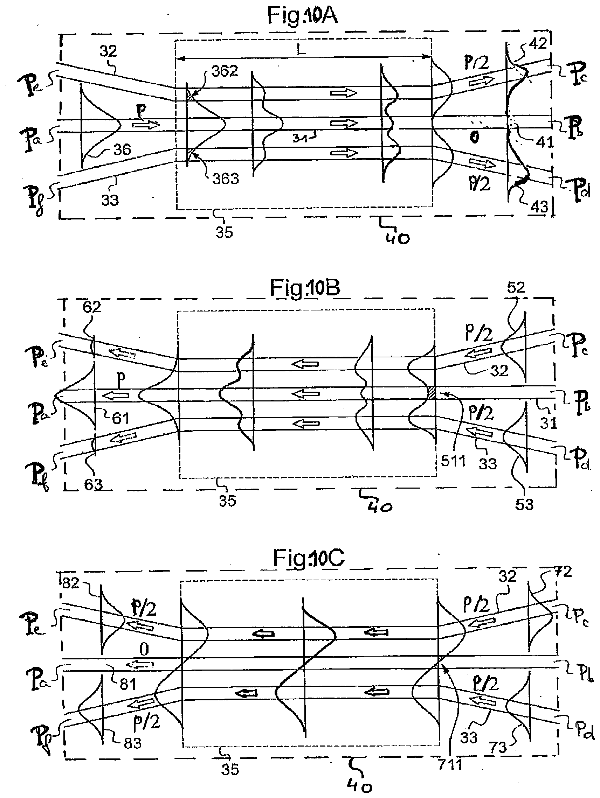

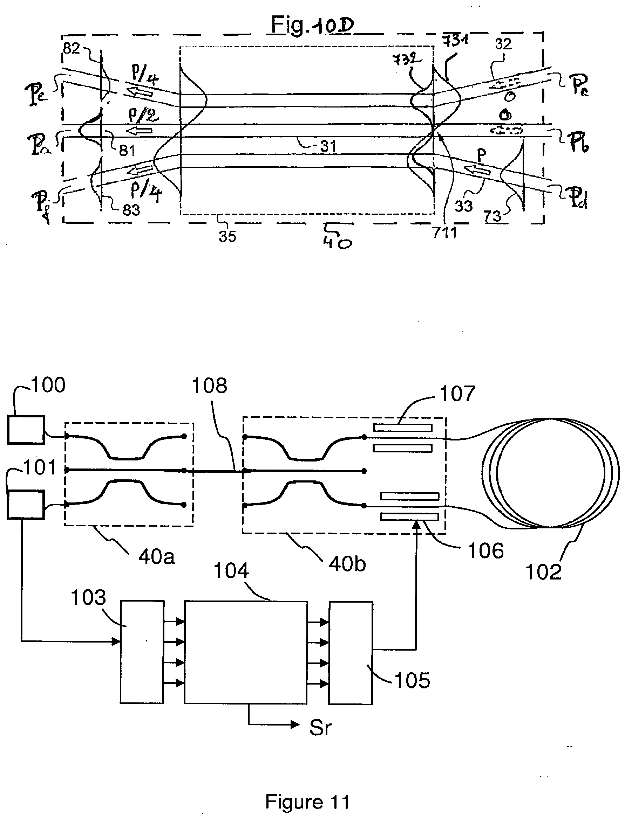

Nous allons tout d'abord détailler le fonctionnement du coupleur optique 40 dans un sens direct de propagation d'un faisceau incident (de gauche à droite sur les figures 8 et 10A), puis dans le sens opposé de propagation (de droite à gauche sur les figures 10B, 10C et 10D).

La figure 10A représente le fonctionnement du coupleur optique 40 dans le sens direct de propagation. Sur la figure 10A, on a représenté la zone de couplage évanescent 35 d'un coupleur optique selon un mode de réalisation préféré de l'invention. Supposons qu'un faisceau optique monomode 36 de puissance p soit injecté sur la porte d'entrée Pa du guide d'onde central 31, tandis qu'aucun faisceau optique n'est couplé sur les portes d'entrée Pe et Pf des deux guides d'onde latéraux 32, 33. A l'entrée de la zone de couplage 35, le faisceau incident présente une distribution spatiale de puissance centrée sur le guide d'onde central 31, avec un maximum sur le guide d'onde central et s'étend en décroissant vers les guides d'onde latéraux 32, 33. La distance d entre le guide central 31 et le guide latéral 32, respectivement 33, est telle que le faisceau incident présente une zone de recouvrement énergétique 362 sur le guide d'onde latéral 32 et symétriquement une zone de recouvrement énergétique 363 sur le guide d'onde latéral 33. Au cours de sa propagation dans la zone de couplage 35, le faisceau incident 36 est progressivement couplé par recouvrement et de manière symétrique dans les deux guides d'onde latéraux 32, 33. Le coupleur 3x3 reste toujours symétrique pour les voies latérales. Au bout d'une longueur L de la zone de couplage égale à Lc' la distribution spatiale de puissance du faisceau présente deux maxima centrés respectivement sur chacun des guides d'onde latéraux 32, 33 et un minimum sur le guide d'onde central 31. A cette longueur Lc' la moitié de la puissance du faisceau incident 36 est transférée sur un guide d'onde latéral 32 et l'autre moitié de la puissance du faisceau incident est transférée sur l'autre guide d'onde latéral 33. Sur la sortie latérale Pc, respectivement Pd, du coupleur 40, un faisceau secondaire 42, respectivement 43, de puissance égale à p/2 se propage. Les faisceaux optiques secondaires de sortie 42 et 43 sont en phase. Sur la sortie centrale Pb du guide d'onde central 31, seul un faisceau secondaire 41 de puissance résiduelle quasiment nulle (ε<<1) se propage. On obtient ainsi un routeur optique 50-50 ou séparateur optique parfaitement équilibré en puissance entre la porte Pc et la porte Pd du fait de la symétrie de ce coupleur optique.

La longueur L de la zone de couplage évanescent 35 pour une distance d entre les guides d'onde dans cette zone 35 peut être déterminée en pratique en couplant un faisceau incident sur l'entrée Pa du guide central et en mesurant l'intensité sur la sortie Pb de ce guide d'onde central. Lorsque la longueur L de la zone de couplage d'un coupleur 3x3 est égale à une longueur L_{eq} la puissance incidente sur la porte d'entrée Pa est équi-répartie en trois tiers sur les trois portes de sortie Pb, Pc et Pd. En fait, la courbe de couplage sur les portes Pc et Pd suit une loi en (½ x sin²(π/2 x L/ Lc')). Par conservation de l'énergie, la courbe de puissance transmise sur la porte Pb suit une loi en cos²(π/2 x L/ Lc'). Selon l'invention, on allonge la longueur L de la zone de couplage 35 d'un coupleur 3x3 équi-réparti, tout en conservant les mêmes distances entre guides d'onde, et donc la même force de couplage entre guides d'onde adjacents. Dans des conditions de longueur d'onde et de température identiques, pour une longueur L égale à Lc', la puissance sur la porte Pb est nulle, tandis que la puissance couplée sur la porte Pc et sur la porte Pd est égale à p/2. Autrement dit, lorsque l'intensité sur la sortie Pb est nulle, cela correspond au point de fonctionnement de séparation 50-50 entre les deux sorties latérales Pc et Pd. Cette configuration assure un couplage maximum entre la porte d'entrée Pa et les deux portes utiles de sortie Pc et Pd. Le point de fonctionnement du routeur optique 3x3 à 50-50 correspond à une valeur L égale à Lc' telle que ½ sin² (π/2 x Lc'/ Lc') est égal à 1/2 et cos² (π/2 x Lc'/ Lc') est égal à 0. Numériquement, on calcule que la longueur Lc' est égale à L_{eq} x 1,6443 où L_{eq} correspond à la longueur d'un coupleur 3x3 équi-réparti en énergie (1/3, 1/3, 1/3), cette valeur étant donnée par (π / 2) x 1/Arc cos(1/√3)) = 1,6443. Le point de fonctionnement du routeur optique 50-50 de l'invention se situe à un maximum de la courbe de distribution de puissance pour les portes Pc et Pd et à un minimum pour la porte Pb. A ces points minimum et maximum des courbes de couplage, le routeur 50-50 de l'invention présente une grande stabilité aussi bien en longueur d'onde qu'en température.

Avantageusement selon l'invention, la longueur L du routeur optique 50-50 de l'invention est comprise entre une longueur L telle que plus de 90% de la puissance p/2 soit transférée sur les portes Pc et Pd des guides d'onde latéraux, ce qui correspond à une longueur L comprise entre 0,8xLc' et 1,2xLc' ou à une longueur L comprise entre 1,3154 x L_{eq} et 2 x L_{eq}. Dans une variante de haute performance, la longueur L du routeur optique 50-50 de l'invention est comprise entre une longueur L telle que plus de 99% de la puissance p/2 soit transférée sur les portes Pc et Pd des guides d'onde latéraux, ce qui correspond à une longueur L comprise entre 0,94xLc' et 1,06xLc' ou à une longueur L comprise entre 1,55 x L_{eq} et 1,74 x L_{eq}. Comme indiqué plus haut, la longueur Lc' est égale à 1,6443 fois la longueur L_{eq} d'un coupleur 3x3 équi-réparti, ce qui reste compatible avec la longueur d'un substrat de COI de 40 à 50 mm.

En dehors de la zone de couplage optique 35, le premier guide d'onde 31, le deuxième guide d'onde 32, et le troisième guide d'onde 33 s'éloignent les uns des autres entre chacune des portes d'entrée, respectivement Pa, Pe, Pf et la zone de couplage optique 35. De même, le premier guide d'onde 31, le deuxième guide d'onde 32, et le troisième guide d'onde 33 s'éloignent les uns des autres entre la zone de couplage optique 35 et chacune des portes de sortie respectivement Pb, Pc, Pd. Les faisceaux guidés sur les différents guides d'onde 31, 32, 33 se propagent de manière guidée et indépendante sur chaque guides d'onde 31, 32, 33 en dehors de la zone de couplage optique 35.

Examinons maintenant le fonctionnement de ce coupleur 3x3, dans le sens inverse de propagation de la lumière sur les figures 10B à 10D.

La figure 10B représente le fonctionnement du routeur 50-50 en mode symétrique, dans le sens inverse de propagation des faisceaux. Ce fonctionnement est réciproque par rapport au fonctionnement en sens direct de la figure 10A. Supposons tout d'abord qu'un faisceau 52 de puissance p/2 est couplé sur la sortie Pc du deuxième guide d'onde latéral 32 et qu'un faisceau 53 de même puissance p/2 est couplé sur la sortie Pd du troisième guide d'onde latéral 33, les deux faisceaux 52 et 53 étant monomodes et en phase (Fig. 10B). Dans le même temps, aucun faisceau optique n'est couplé sur la sortie Pb du guide d'onde central 31. Les deux faisceaux 52, 53 entrent dans la zone de couplage évanescent 35. Le faisceau 52 et le faisceau 53 sont en phase et présentent chacun une zone de recouvrement avec le guide d'onde central 31. Les deux zones de recouvrement se superposent sur le guide d'onde central 31 pour former une zone de recouvrement énergétique 511. Du fait du recouvrement (overlap) avec le guide d'onde central 31, ces deux faisceaux 52, 53 en phase sont entièrement couplés dans le guide d'onde central 31 après une longueur de couplage L égale à Lc' c'est à dire à l'autre extrémité de la zone de couplage évanescent 35, où les guides d'onde 31, 32, 33 s'éloignent les uns des autres. On retrouve ainsi toute la puissance p des deux faisceaux incidents sur la porte d'entrée Pa du guide d'onde central 31 (faisceau 61), tandis que sur chacune des deux portes d'entrée Pe, Pf des guides d'onde latéraux 32, 33 la puissance des faisceaux secondaires retour 62 et 63 est quasi-nulle (ε'<<1).

La figure 10C représente le fonctionnement du routeur 50-50 en mode antisymétrique. Supposons maintenant qu'un faisceau 72 de puissance p/2 est couplé sur la sortie Pc du deuxième guide d'onde latéral 32 et qu'un faisceau 73 de même puissance p/2 est couplé sur la sortie Pd du troisième guide d'onde latéral 33, les deux faisceaux 72, 73 étant monomodes et en opposition de phase (Fig. 10C). Les deux faisceaux 72, 73 entrent dans la zone de couplage évanescent 35. Comme précédemment, les deux faisceaux 72, 73 se recouvrent partiellement dans le guide d'onde central 35. Toutefois, les deux faisceaux 72, 73 étant en opposition de phase, la superposition énergétique des zones de recouvrement s'annule dans le guide d'onde central 31. Il n'y a alors pas de couplage dans le guide d'onde central 31. Il ne se produit pas non plus de couplage évanescent entre les deux guides d'onde latéraux 32, 33 qui sont trop éloignés l'un de l'autre dans un circuit optique intégré planaire. Après propagation sur la longueur L de la zone de couplage évanescent 35, chaque guide d'onde latéral 32, respectivement 33 transporte un faisceau 82, respectivement 83 conservant quasiment la même puissance qu'à l'entrée de la zone de couplage évanescent 35, les faisceaux 82, 83 étant en opposition de phase. On retrouve donc un faisceau 82 ayant une puissance ∼p/2 sur la porte d'entrée Pe du guide d'onde latéral 32, un faisceau 83 ayant une puissance ∼p/2 sur la porte d'entrée Pf de l'autre guide d'onde latéral 33 et un faisceau 81 de puissance quasiment nulle (<<1) sur la porte d'entrée Pa du guide d'onde central 31. Le mode antisymétrique du routeur 3x3 est donc distribuée à 50-50 entre les portes d'entrée Pe et Pf des guides d'onde latéraux 32 et 33. L'avantage du coupleur 3x3 ainsi configuré est de permettre de guider optiquement le mode antisymétrique, ce qui évite de perturber le signal sur la porte centrale, contrairement au cas de la jonction Y.

La figure 10D représente le mode de fonctionnement du routeur 50-50 dans le sens inverse de propagation des faisceaux quand seul un faisceau 73 de puissance p est couplé sur la sortie Pd du troisième guide d'onde latéral 33 et donc quand aucune puissance n'est couplée sur les portes Pb et Pc des guides d'ondes 31 et 32 respectivement. Le mode de fonctionnement de la figure 10D correspond à la combinaison linéaire des modes représentés sur la figure 10B et sur la figure 10C. Le faisceau 73 peut se décomposer en un mode symétrique 732 à deux lobes de puissance p/2 et centré sur les guides d'onde 32 et 33 et un mode antisymétrique 731 aussi de puissance p/2 sur ces mêmes guides d'onde 32 et 33. Les modes symétriques et antisymétriques à deux lobes sont en phase sur le guide d'onde 33 où il y a de la lumière, et en opposition de phase sur le guide d'onde 32 où il n'y a pas de lumière. Après propagation à travers la zone de couplage, le mode symétrique à deux lobes 732 s'est couplé complètement sur le guide d'onde central, tandis que le mode antisymétrique 731 est resté dans les deux guides latéraux. On obtient donc sur la porte Pa, un faisceau 81 de puissance égale à p/2, sur la porte Pe un faisceau 82 de puissance égale à p/4 et sur la porte Pf un faisceau 83 de puissance égale à p/4.

Le routeur optique 50-50 de l'invention présente l'avantage de guider tous les faisceaux optiques et de présenter une grande stabilité, notamment en longueur d'onde.

Selon un mode de réalisation préféré de l'invention, décrit en lien avec les figures 8 et 10A-10D, le routeur 50-50 est fabriqué sur un circuit optique intégré planaire.

Selon un autre mode de réalisation, un routeur optique 50-50 peut être fabriqué sur fibre optique par fusion-étirage à partir de trois fibres optiques. Dans un coupleur 3x3 par champ évanescent à trois fibres optiques, le coeur de chacune des trois fibres optiques est situé aux sommets d'un triangle équilatéral.

Sur la figure 11 est représenté schématiquement un gyroscope à fibre optique comprenant deux routeurs 50-50 à base de coupleurs 3x3 et 50-50, tels que décrits plus haut. Le gyroscope comporte une bobine de fibre optique 102, une source de lumière 100, un détecteur 101, un premier routeur optique 40a, un circuit optique intégré (COI) comprenant un deuxième routeur optique 40b et une paire de modulateurs de phase intégrés 106, 107. Le guide d'onde central du premier routeur 40a est relié optiquement par une fibre optique monomode 108 au guide d'onde central du deuxième routeur optique 40b. Le gyroscope comporte également un convertisseur analogique-numérique 103, un processeur numérique 104 et un convertisseur numérique-analogique 105. Le premier routeur optique 40a fonctionne comme un séparateur de faisceau pour séparer la source 100 du détecteur 101. Alternativement, à la place du premier routeur optique 40a, on peut utiliser un séparateur de faisceau classique ou un circulateur optique. Le routeur optique 40b comporte trois guides d'onde et est configuré de manière à obtenir une répartition énergétique 50-50 sur les deux guides d'ondes latéraux. Avantageusement, la longueur L de la zone de couplage évanescent 35 est comprise entre 0.8xLc' et 1.2x Lc', où Lc' est la longueur de couplage latéral 50-50 telle que définie plus haut. Autrement dit, la longueur L de la zone de couplage évanescent 35 est comprise entre1,3154 x L_{eq} et 2 x L_{eq} où L_{eq} représente la longueur pour un couplage équi-réparti en puissance (1/3, 1/3, 1/3). La source de lumière 100 émet un faisceau optique incident qui est dirigé vers une première entrée du routeur optique 40a. En sortie du routeur optique 40b, la répartition énergétique est contrôlée de manière à ce que la puissance sur la porte de sortie Pb inférieure à 10% de la puissance incidente. De manière encore plus avantageuse, la puissance sur la porte de sortie Pb inférieure à 1% de la puissance incidente. Lorsque la puissance sur la porte de sortie Pb du premier guide d'onde est minimisée, cela correspond au point de fonctionnement à 50-50 du routeur optique 40b. Une extrémité de la bobine de fibre optique 102 est couplée optiquement à une sortie du COI 40b, l'autre extrémité de la bobine de fibre optique 102 est couplée optiquement à une autre sortie du COI 40b. Ainsi, un faisceau secondaire ayant une puissance égale à p/2 se propage dans le sens direct de la bobine de fibre optique 102, et un autre faisceau secondaire ayant une puissance égale à p/2 se propage dans le sens inverse de la bobine de fibre optique 102. A l'entrée de la bobine de fibre optique 102, les deux faisceaux secondaires sont en phase. Après propagation le long de la bobine de fibre optique, respectivement dans le sens direct et dans le sens inverse, les faisceaux secondaires subissent, par effet Sagnac, un déphasage relatif qui est proportionnel à la vitesse de rotation de la bobine de fibre optique 102. Des électrodes 106, 107 déposées de part et d'autre des guides d'onde du COI 40b permettent de moduler la phase des faisceaux optiques pour améliorer le traitement du signal. En sortie de la bobine 102, on collecte un premier faisceau sur un guide d'onde latéral et un deuxième faisceau sur un autre guide d'onde du COI 40b. Par réciprocité, les deux faisceaux en sortie de la bobine de fibre optique ont la même puissance. Le mode réciproque antisymétrique se propage sur le guide d'onde central du routeur 40b puis sur la fibre optique 108 en direction d'un autre routeur 40a (ou d'un séparateur ou d'un circulateur) et est couplé en direction du détecteur 101. Un convertisseur 103 convertit le signal analogique du détecteur en un signal numérique. Après traitement du signal on obtient un signal Sr représentatif d'une mesure de rotation de la bobine de fibre optique 102. Le processeur calcule la modulation à appliquer sur les électrodes du modulateur de phase 106, 107 via le convertisseur 105. Dans une variante, on peut mesurer des signaux secondaires se propageant sur les portes Pe et Pf du deuxième routeur optique 40b. Le gyroscope de la figure 11 a l'avantage de permettre une mesure de rotation tout en guidant le mode réciproque antisymétrique sur une autre porte guidée.

Le routeur optique guidé 50-50 permet par double couplage latéral de diviser un faisceau optique monomode incident en deux faisceaux optiques monomodes de même puissance (c'est-à-dire -3dB) dans le sens direct. Dans le sens inverse de propagation des faisceaux, le routeur optique de l'invention permet de combiner deux faisceaux optiques et de les diriger sans perte pour former un mode symétrique guidé vers une porte et un mode antisymétrique également guidé vers une ou deux autres portes. Le routeur optique à champ évanescent présente une grande stabilité thermique et spectrale et est facile à ajuster.

Un routeur 50-50 à double couplage latéral par champ évanescent selon l'invention présente l'avantage, par comparaison avec une jonction Y, de permettre de collecter et de guider le mode antisymétrique. Le routeur de l'invention permet d'éviter que le mode antisymétrique ne perturbe le signal du mode symétrique.

Le routeur 50-50 combine donc l'avantage de symétrie et de stabilité associée d'une jonction Y et celui de guidage de l'ensemble des portes d'un coupleur 2x2.

## Revendications

1. Interféromètre en anneau de Sagnac à fibre optique comprenant un routeur optique guidé (40b) comprenant un coupleur optique à champ évanescent ayant trois portes d'entrée (Pa, Pe, Pf), trois portes de sortie (Pb, Pc, Pd), un premier guide d'onde monomode central (31) reliant la première porte d'entrée (Pa) et la première porte de sortie (Pb), un deuxième guide d'onde monomode latéral (32) reliant la deuxième porte d'entrée (Pe) et la deuxième porte de sortie (Pc), et un troisième guide d'onde monomode latéral (33) reliant la troisième porte d'entrée (Pf) et la troisième porte de sortie (Pd), ledit coupleur optique comprenant une zone de couplage optique (35) par champ évanescent dans laquelle lesdits premier, deuxième et troisième guides d'onde (31, 32, 33) sont disposés parallèlement entre eux, lesdits deuxième et troisième guides d'onde latéraux (32, 33) étant disposés de manière symétrique par rapport au premier guide d'onde central (31), et la distance d entre d'une part le premier guide d'onde central (31) et l'un quelconque des deuxième et troisième guides d'onde latéraux étant inférieure à une distance prédéterminée pour permettre un couplage par champ évanescent entre le premier guide d'onde central (31) et l'un quelconque des deuxième et troisième guides d'onde latéraux (32, 33) dans la zone de couplage optique (35), la zone de couplage optique (35) par champ évanescent du coupleur optique à champ évanescent a une longueur de couplage L comprise entre 1,3154 x Leq et 2 x Leq où Leq représente la longueur de couplage équi-réparti en puissance pour un coupleur optique de référence à champ évanescent à trois portes d'entrée et trois portes de sorties, ayant les mêmes distances entre guides d'onde et dans les mêmes conditions de longueur d'onde des faisceaux et de température, de manière à ce que pour ladite longueur de couplage L, un faisceau optique (36) couplé sur la première porte d'entrée (Pa) ayant une puissance p et se propageant sur le premier guide d'onde central (31) dans le sens direct soit divisé en un premier faisceau secondaire (42) ayant une puissance supérieure ou égale à 90% de p/2 sur la deuxième porte de sortie (Pc) et un autre faisceau secondaire (43) ayant une puissance supérieure ou égale à 90% de p/2 sur la troisième porte de sortie (Pd) et en ce que lesdits premier, deuxième et troisième guides d'onde (31, 32, 33) s'éloignent les uns des autres en dehors de la zone de couplage optique (35) entre chacune des portes d'entrée (Pa, Pe, Pf) et la zone de couplage optique (35) et respectivement entre la zone de couplage optique (35) et chacune des portes de sortie (Pb, Pc, Pd), lesdits premier, deuxième et troisième guides d'onde (31, 32, 33) étant adptés pour collecter et guider sur des guides d'onde séparés (31, 32, 33) des faisceaux optiques en mode symétrique et en mode antisymétrique se propageant dans le sens direct entre la zone de couplage optique (35) et chacune des portes de sortie (Pb, Pc, Pd) et, respectivement, pour collecter et guider sur des guides d'onde séparés (31, 32, 33) des faisceaux optiques en mode symétrique et en mode antisymétrique se propageant dans le sens inverse entre la zone de couplage optique (35) et chacune des portes de sortie (Pa, Pe, Pf) et ledit interféromètre comprenant une source de lumière (100), une bobine de fibre optique (102) ayant deux extrémités, ladite source de lumière (100) de longueur d'onde λ étant couplée optiquement à la première porte d'entrée (Pa) du routeur optique guidé et dans lequel chacune des deux extrémités de la bobine de l'interféromètre à fibre optique (102) est couplée respectivement à l'une des deuxième et troisième portes de sortie (Pc, Pd) du routeur optique guidé (40b), un détecteur (101) couplé optiquement à la première porte d'entrée (Pa) dudit routeur optique guidé (40b) pour détecter un signal interférométrique.

2. Interféromètre en anneau de Sagnac selon la revendication 1 dans lequel au moins une des deux entrées secondaires (Pe, Pf) du routeur optique (40b) est reliée à des moyens de détection optique aptes à détecter au moins un faisceau optique secondaire retour.

3. Procédé de routage optique guidé par champ évanescent dans un interféromètre en anneau de Sagnac comprenant les étapes suivantes :
- envoi d'un faisceau optique monomode (36) ayant une puissance p sur la première porte d'entrée (Pa) d'un routeur optique_guidé bidirectionnel comprenant un coupleur optique à champ évanescent ayant trois portes d'entrée (Pa, Pe, Pf), trois portes de sortie (Pb, Pc, Pd), un premier guide d'onde monomode central (31) reliant la première porte d'entrée (Pa) et la première porte de sortie (Pb), un deuxième guide d'onde monomode latéral (32) reliant la deuxième porte d'entrée (Pe) et la deuxième porte de sortie (Pc), et un troisième guide d'onde monomode latéral (33) reliant la troisième porte d'entrée (Pf) et la troisième porte de sortie (Pd), ledit coupleur optique comprenant une zone de couplage optique (35) par champ évanescent dans laquelle lesdits premier, deuxième et troisième guides d'onde (31, 32, 33) sont disposés parallèlement entre eux, lesdits deuxième et troisième guides d'onde latéraux (32, 33) étant disposés de manière symétrique par rapport au premier guide d'onde central (31), et la distance d entre d'une part le premier guide d'onde central (31) et l'un quelconque des deuxième et troisième guides d'onde latéraux étant inférieure à une distance prédéterminée pour permettre un couplage par champ évanescent entre le premier guide d'onde central (31) et l'un quelconque des deuxième et troisième guides d'onde latéraux (32, 33) dans la zone de couplage optique (35), dans lequel la zone de couplage optique (35) par champ évanescent du coupleur optique à champ évanescent a une longueur de couplage L comprise entre 1,3154 x L_{eq} et 2 x L_{eq} où L_{eq} représente la longueur de couplage équi-réparti en puissance pour un coupleur optique de référence à champ évanescent à trois portes d'entrée et trois portes de sorties, ayant les mêmes distances entre guides d'onde et dans les mêmes conditions de longueur d'onde des faisceaux et de température, de manière à ce que pour ladite longueur de couplage L, un faisceau optique (36) couplé sur la première porte d'entrée (Pa) ayant une puissance p et se propageant sur le premier guide d'onde central (31) dans le sens direct soit divisé en un premier faisceau secondaire (42) ayant une puissance supérieure ou égale à 90% de p/2 sur la deuxième porte de sortie (Pc) et un autre faisceau secondaire (43) ayant une puissance supérieure ou égale à 90% de p/2 sur la troisième porte de sortie (Pd) et en ce que lesdits premier, deuxième et troisième guides d'onde (31, 32, 33) s'éloignent les uns des autres en dehors de la zone de couplage optique (35) entre chacune des portes d'entrée (Pa, Pe, Pf) et la zone de couplage optique (35) et respectivement entre la zone de couplage optique (35) et chacune des portes de sortie (Pb, Pc, Pd), lesdits premier, deuxième et troisième guides d'onde (31, 32, 33) étant adptés pour collecter et guider sur des guides d'onde séparés (31, 32, 33) des faisceaux optiques en mode symétrique et en mode antisymétrique se propageant dans le sens direct entre la zone de couplage optique (35) et chacune des portes de sortie (Pb, Pc, Pd) et, respectivement, pour collecter et guider sur des guides d'onde séparés (31, 32, 33) des faisceaux optiques en mode symétrique et en mode antisymétrique se propageant dans le sens inverse entre la zone de couplage optique (35) et chacune des portes de sortie (Pa, Pe, Pf) ;
- collection d'un premier faisceau secondaire (42) sur la deuxième porte de sortie (Pc) dudit routeur optique guidé, ledit premier faisceau secondaire ayant une puissance supérieure ou égale à 90% de p/2 ;
- collection d'un autre faisceau secondaire (43) sur la troisième porte de sortie (Pd) dudit routeur optique guidé, ledit autre faisceau secondaire (43) ayant une puissance supérieure ou égale à 90% de p/2,
- couplage optique dudit premier faisceau secondaire (42) sur une première extrémité d'une bobine de fibre optique (102) d'un interféromètre en anneau de Sagnac de manière à ce que ledit premier faisceau secondaire (42) parcoure ladite bobine de fibre optique (102) suivant un sens de propagation direct ;
- couplage optique dudit autre faisceau secondaire (43) sur une deuxième extrémité de ladite bobine de fibre optique (102) dudit interféromètre en anneau de Sagnac de manière à ce que ledit autre faisceau secondaire (43) parcoure ladite bobine de fibre optique (102) suivant un sens de propagation inverse ;
- détection d'un signal interférométrique sur la première porte d'entrée (Pa) dudit routeur optique guidé (40b) ;
- guidage d'un faisceau optique secondaire retour de mode antisymétrique sur le deuxième guide d'onde (32) vers la deuxième porte d'entrée (Pe) et sur le troisième guide d'onde (33) vers la troisième porte d'entrée (Pf) dudit routeur optique guidé (40b).

4. Procédé de routage optique selon la revendication 3, comprenant les étapes suivantes :
- détection d'un signal représentatif d'un faisceau secondaire (41) ayant une puissance résiduelle sur la première porte de sortie (Pb) dudit routeur optique guidé, et
- modification de la longueur d'interaction L de manière à minimiser ladite puissance résiduelle dudit faisceau secondaire (41).

## Patentansprüche

1. Sagnac-Glasfaser-Ringinterferometer mit einem geführten optischen Router (40b) mit einem optischen Koppler mit evaneszentem Feld, der drei Eingangsports (Pa, Pe, Pf), drei Ausgangsports (Pb, Pc, Pd), einen zentralen ersten monomodalen Wellenleiter (31), der den ersten Eingangsport (Pa) mit dem ersten Ausgangsport (Pb) verbindet, einen seitlichen zweiten monomodalen Wellenleiter (32), der den zweiten Eingangsport (Pe) mit dem zweiten Ausgangsport (Pc) verbindet, und einen seitlichen dritten monomodalen Wellenleiter (33), der den dritten Eingangsport (Pf) mit dem dritten Ausgangsport (Pd) verbindet, aufweist, wobei der optische Koppler eine Zone (35) für optische Kopplung durch ein Evaneszenzfeld aufweist, in der der erste, der zweite und der dritte Wellenleiter (31 32, 33) zueinander parallel angeordnet sind, wobei der seitliche zweite und der seitliche dritte Wellenleiter (32, 33) symmetrisch zum zentralen ersten Wellenleiter (31) angeordnet sind, und wobei der Abstand d zwischen dem zentralen ersten Wellenleiter (31) einerseits und einem der beiden seitlichen Wellenleiter, dem zweiten oder dem dritten, andererseits kleiner als ein vorgegebener Abstand ist, um eine Evaneszenzfeldkopplung zwischen dem zentralen ersten Wellenleiter (31) und einem der beiden seitlichen Wellenleiter (32, 33), dem zweiten oder dem dritten, in der optischen Kopplungszone (35) zu ermöglichen, wobei die Zone (35) für optische Kopplung durch ein Evaneszenzfeld des optischen Kopplers mit evaneszentem Feld eine Kopplungslänge L zwischen 1,3154 x L_{eq} und 2 x L_{eq} aufweist, wobei L_{eq} die Kopplungslänge bei leistungsmäßig gleichmäßiger Aufteilung für einen Koppler mit drei Eingangsporten und drei Ausgangsporten, der gleiche Abstände zwischen den Wellenleitern hat, und unter den gleichen Bedingungen hinsichtlich der Wellenlänge und der Temperatur darstellt, damit ein optischer Strahl (36), der am ersten Eingangsport (Pa) eingekoppelt ist und eine Leistung p aufweist und sich auf dem zentralen ersten Wellenleiter (31) in der Vorwärtsrichtung ausbreitet, bei der Kopplungslänge L in einen ersten Sekundärstrahl (42), der eine Leistung von mehr als oder gleich 90 % von p/2 am zweiten Ausgangsport (Pc) aufweist, und einen weiteren Sekundärstrahl (43), der eine Leistung von mehr als oder gleich 90 % von p/2 am dritten Ausgangsport (Pd) aufweist, aufgeteilt wird, und sich der erste, der zweite und der dritte Wellenleiter (31, 32, 33) außerhalb der optischen Kopplungszone (35) zwischen jedem der Eingangsports (Pa, Pe, Pf) und der Kopplungszone (35) und zwischen der Kopplungszone (35) und jedem der Ausgangsports (Pb, Pc, Pd) voneinander entfernen, wobei der erste, der zweite und der dritte Wellenleiter (31, 32, 33) dazu ausgelegt sind, auf den getrennten Wellenleitern (31, 32, 33) optische Strahlen im symmetrischen und im antisymmetrischen Modus, die sich zwischen der optischen Kopplungszone (35) und jedem der Ausgangsports (Pb, Pc, Pd) in der Vorwärtsrichtung ausbreiten, zu sammeln und zu leiten und entsprechend um auf den getrennten Wellenleitern (31, 32, 33) optische Strahlen im symmetrischen und im antisymmetrischen Modus, die sich zwischen der optischen Kopplungszone (35) und jedem der Ausgangsports (Pa, Pe, Pf) in der umgekehrten Richtung ausbreiten, zu sammeln und zu leiten, und wobei das Interferometer eine Lichtquelle (100), eine Spule aus einer optischen Faser (102) mit zwei Enden, wobei die Lichtquelle (100) der Wellenlänge λ optisch mit dem ersten Eingangsport (Pa) des geführten optischen Routers gekoppelt ist und bei dem jedes der beiden Enden der Spule des Interferometers mit optischer Faser (102) mit dem zweiten bzw. mit dem dritten Ausgangsport (Pc, Pd) des geführten optischen Routers (40b) gekoppelt ist, einen optisch mit dem ersten Eingangsport (Pa) des geführten optischen Routers (40b) gekoppelten Detektor (101) zum Erfassen eines interferometrischen Signals aufweist.

2. Sagnac-Ringinterferometer gemäß Anspruch 1, bei dem wenigstens einer der beiden Sekundäreingänge (Pe, Pf) des ersten geführten optischen Routers (40b) mit optischen Detektormitteln verbunden ist, die geeignet sind, wenigstens einen rücklaufenden optischen Sekundärstrahl zu erfassen.

3. Verfahren für geführtes optisches Routing mit einem Evaneszenzfeld, das die folgenden Schritte aufweist:
- Aussenden eines monomodalen optischen Strahls (36) der Leistung p zu einem ersten Eingangsport (Pa) eines bidirektionalen geführten optischen Routers, der einen optischen Koppler mit evaneszentem Feld, der drei Eingangsports (Pa, Pe, Pf), drei Ausgangsports (Pb, Pc, Pd), einen zentralen ersten monomodalen Wellenleiter (31), der den ersten Eingangsport (Pa) mit dem ersten Ausgangsport (Pb) verbindet, einen seitlichen zweiten monomodalen Wellenleiter (32), der den zweiten Eingangsport (Pe) mit dem zweiten Ausgangsport (Pc) verbindet, und einen seitlichen dritten monomodalen Wellenleiter (33), der den dritten Eingangsport (Pf) mit dem dritten Ausgangsport (Pd) verbindet, aufweist, wobei der optische Koppler eine Zone (35) für optische Kopplung durch ein Evaneszenzfeld aufweist, in der der erste, der zweite und der dritte Wellenleiter (31 32, 33) zueinander parallel angeordnet sind, wobei der seitliche zweite und der seitliche dritte Wellenleiter (32, 33) symmetrisch zum zentralen ersten Wellenleiter (31) angeordnet sind, und wobei der Abstand d zwischen dem zentralen ersten Wellenleiter (31) einerseits und einem der beiden seitlichen Wellenleiter, dem zweiten oder dem dritten, andererseits kleiner als ein vorgegebener Abstand ist, um eine Evaneszenzfeldkopplung zwischen dem zentralen ersten Wellenleiter (31) und einem der beiden seitlichen Wellenleiter (32, 33), dem zweiten oder dem dritten, in der optischen Kopplungszone (35) zu ermöglichen, wobei die Zone (35) für optische Kopplung durch ein Evaneszenzfeld des optischen Kopplers mit evaneszentem Feld eine Kopplungslänge L zwischen 1,3154 x L_{eq} und 2 x L_{eq} aufweist, wobei L_{eq} die Kopplungslänge bei leistungsmäßig gleichmäßiger Aufteilung für einen Koppler mit drei Eingangsporten und drei Ausgangsporten, der gleiche Abstände zwischen den Wellenleitern hat, und unter den gleichen Bedingungen hinsichtlich der Wellenlänge und der Temperatur darstellt, damit ein optischer Strahl (36), der am ersten Eingangsport (Pa) eingekoppelt ist und eine Leistung p aufweist und sich auf dem zentralen ersten Wellenleiter (31) in der Vorwärtsrichtung ausbreitet, bei der Kopplungslänge L in einen ersten Sekundärstrahl (42), der eine Leistung von mehr als oder gleich 90 % von p/2 am zweiten Ausgangsport (Pc) aufweist, und einen weiteren Sekundärstrahl (43), der eine Leistung von mehr als oder gleich 90 % von p/2 am dritten Ausgangsport (Pd) aufweist, aufgeteilt wird, und sich der erste, der zweite und der dritte Wellenleiter (31, 32, 33) außerhalb der optischen Kopplungszone (35) zwischen jedem der Eingangsports (Pa, Pe, Pf) und der Kopplungszone (35) und zwischen der Kopplungszone (35) und jedem der Ausgangsports (Pb, Pc, Pd) voneinander entfernen, wobei der erste, der zweite und der dritte Wellenleiter (31, 32, 33) dazu ausgelegt sind, auf den getrennten Wellenleitern (31, 32, 33) optische Strahlen im symmetrischen und im antisymmetrischen Modus, die sich zwischen der optischen Kopplungszone (35) und jedem der Ausgangsports (Pb, Pc, Pd) in der Vorwärtsrichtung ausbreiten, zu sammeln und zu leiten und entsprechend um auf den getrennten Wellenleitern (31, 32, 33) optische Strahlen im symmetrischen und im antisymmetrischen Modus, die sich zwischen der optischen Kopplungszone (35) und jedem der Ausgangsports (Pa, Pe, Pf) in der umgekehrten Richtung ausbreiten, zu sammeln und zu leiten,
- Sammeln eines ersten Sekundärstrahls (42) am zweiten Ausgangsport (Pc) des geführten optischen Routers, wobei der erste Sekundärstrahl eine Leistung von mehr als oder gleich 90 % von p/2 aufweist,
- Sammeln eines weiteren Sekundärstrahls (43) am dritten Ausgangsport (Pd) des geführten optischen Routers, wobei der weitere Sekundärstrahl (43) eine Leistung von mehr als oder gleich 90 % von p/2 aufweist,
- optisches Koppeln des ersten Sekundärstrahls (42) auf ein erstes Ende einer Spule aus einer optischen Faser (102) eines Sagnac-Ringinterferometers dergestalt, daß der erste Sekundärstrahl (42) die Spule aus einer optischen Faser (102) in einer Vorwärtsausbreitungsrichtung durchläuft,
- optisches Koppeln des weiteren Sekundärstrahls (43) auf ein zweites Ende der Spule aus einer optischen Faser (102) des Sagnac-Ringinterferometers dergestalt, daß der weitere Sekundärstrahl (43) die Spule aus einer optischen Faser (102) in einer umgekehrten Ausbreitungsrichtung durchläuft,
- Erfassen eines interferometrischen Signals am ersten Eingangsport (Pa) des geführten optischen Routers (40b),
- Führen eines rücklaufenden optischen Sekundärstrahls mit antisymmetrischem Modus auf dem zweiten Wellenleiter (32) zum zweiten Eingangsport (Pe) und auf dem dritten Wellenleiter (33) zum dritten Eingangsport (Pf) des geführten optischen Routers (40b).

4. Verfahren für geführtes optisches Routing gemäß Anspruch 3, das die folgenden Schritte aufweist:
- Erfassen eines Signals, das für einen Sekundärstrahl (41) steht, der am ersten Ausgangsport (Pb) des geführten optischen Routers eine Restleistung aufweist, und
- Modifizieren der Kopplungslänge L dergestalt, daß die Restleistung des Sekundärstrahls (41) minimiert wird.

## Claims

1. Fiber-optic Sagnac ring interferometer comprising a guided optical router (40b) comprising an evanescent-field optical coupler having three input ports (Pa, Pe, Pf), three output ports (Pb, Pc, Pd), a first central single-mode waveguide (31) connecting the first input port (Pa) and the first output port (Pb), a second lateral single-mode waveguide (32) connecting the second input port (Pe) and the second output port (Pc), and a third lateral single-mode waveguide (33) connecting the third input port (Pf) and the third output port (Pd), said optical coupler comprising an evanescent-field optical coupling zone (35) in which said first, second and third waveguides (31, 32, 33) are arranged parallel to each other, said second and third lateral waveguides (32, 33) being arranged symmetrically with respect to the first central waveguide (31), and the distance d between, on the one hand, the first central waveguide (31) and any one of the second and third lateral waveguides being lower that a predetermined distance to allow an evanescent-field coupling between the first central waveguide (31) and any one of the second and third lateral waveguides (32, 33) in the optical coupling zone (35), the evanescent-field optical coupling zone (35) of the evanescent-field optical coupler has a coupling length L comprised between 1.3154 × L_{eq} and 2 × L_{eq}, where L_{eq} represents the length of equidistributed-power coupling for a reference evanescent-field optical coupler with three input ports and three output ports, having the same distances between waveguides and in the same conditions of beam wavelengths and of temperature, in such a way that, for said coupling length L, an optical beam (36) coupled at the first input port (Pa) having a power p and propagating in the first central waveguide (31) in the forward direction is split into a first secondary beam (42) having a power higher than or equal to 90 % of p/2 at the second output port (Pc) and another secondary beam (43) having a power higher than or equal to 90 % of p/2 at the third output port (Pd), and in that said first, second and third waveguides (31, 32, 33) go away from each other outside the optical coupling zone (35) between each of the input ports (Pa, Pe, Pf) and the optical coupling zone (35) and, respectively, between the optical coupling zone (35) and each of the output ports (Pb, Pc, Pd), said first, second and third waveguides (31, 32, 33) being adapted to collect and guide in separated waveguides (31, 32, 33) optical beams in symmetric mode and anti-symmetric mode propagating in the forward direction between the optical coupling zone (35) and each of the output ports (Pb, Pc, Pd) and, respectively, to collect and guide in separated waveguides (31, 32, 33) optical beams in symmetric mode and anti-symmetric mode propagating in the reverse direction between the optical coupling zone (35) and each of the output ports (Pa, Pe, Pf) and said interferometer comprising a light source (100), a fiber-optic coil (102) having two ends, said light source (100) of wavelength λ being optically coupled to the first input port (Pa) of the guided optical router and wherein each of the two ends of the coil of the fiber-optic interferometer (102) is coupled, respectively, to one of the second and third output ports (Pc, Pd) of the guided optical router (40b), a detector (101) optically coupled to the first input port (Pa) of said guided optical router (40b) to detect an interferometric signal.

2. The Sagnac ring interferometer according to claim 1, wherein at least one of the two secondary inputs (Pe, Pf) of the optical router (40b) is connected to optical detection means operable to detect at least one return secondary optical beam.

3. A method of evanescent-field guided optical routing in a Sagnac ring interferometer comprising the following steps:
- sending a single-mode optical beam (36) having a power p at the first input port (Pa) of a bidirectional guided optical router comprising an evanescent-field optical coupler having three input ports (Pa, Pe, Pf), three output ports (Pb, Pc, Pd), a first central single-mode waveguide (31) connecting the first input port (Pa) and the first output port (Pb), a second lateral single-mode waveguide (32) connecting the second input port (Pe) and the second output port (Pc), and a third lateral single-mode waveguide (33) connecting the third input port (Pf) and the third output port (Pd), said optical coupler comprising an evanescent-field optical coupling zone (35) in which said first, second and third waveguides (31, 32, 33) are arranged parallel to each other, said second and third lateral waveguides (32, 33) being arranged symmetrically with respect to the first central waveguide (31), and the distance d between, on the one hand, the first central waveguide (31) and any one of the second and third lateral waveguides being lower that a predetermined distance to allow an evanescent-field coupling between the first central waveguide (31) and any one of the second and third lateral waveguides (32, 33) in the optical coupling zone (35), the evanescent-field optical coupling zone (35) of the evanescent-field optical coupler has a coupling length L comprised between 1.3154 x L_{eq} and 2 x L_{eq}, where L_{eq} represents the length of equidistributed-power coupling for a reference evanescent-field optical coupler with three input ports and three output ports, having the same distances between waveguides and in the same conditions of beam wavelengths and of temperature, in such a way that, for said coupling length L, an optical beam (36) coupled at the first input port (Pa) having a power p and propagating in the first central waveguide (31) in the forward direction is split into a first secondary beam (42) having a power higher than or equal to 90 % of p/2 at the second output port (Pc) and another secondary beam (43) having a power higher than or equal to 90 % of p/2 at the third output port (Pd), and in that said first, second and third waveguides (31, 32, 33) go away from each other outside the optical coupling zone (35) between each of the input ports (Pa, Pe, Pf) and the optical coupling zone (35) and, respectively, between the optical coupling zone (35) and each of the output ports (Pb, Pc, Pd), said first, second and third waveguides (31, 32, 33) being adapted to collect and guide in separated waveguides (31, 32, 33) optical beams in symmetric mode and anti-symmetric mode propagating in the forward direction between the optical coupling zone (35) and each of the output ports (Pb, Pc, Pd) and, respectively, to collect and guide in separated waveguides (31, 32, 33) optical beams in symmetric mode and anti-symmetric mode propagating in the reverse direction between the optical coupling zone (35) and each of the output ports (Pa, Pe, Pf);
- collecting a first secondary beam (42) at the second output port (Pc) of said guided optical router, said first secondary beam having a power higher than or equal to 90 % of p/2;
- collecting another secondary beam (43) at the third output port (Pd) of said guided optical router, said other secondary beam (43) having a power higher than or equal to 90 % of p/2;
- optically coupling said first secondary beam (42) at a first end of a fiber-optic coil (102) of a Sagnac ring interferometer in such a way that said first secondary beam (42) travels through said fiber-optic coil (102) along a forward direction of propagation;
- optically coupling said other secondary beam (43) at a second end of said fiber-optic coil (102) of said Sagnac ring interferometer in such a way that said other secondary beam (43) travels through said fiber-optic coil (102) along a reverse direction of propagation;
- detecting an interferometric signal at the first input port (Pa) of said guided optical router (40b);
- guiding a return secondary optical beam of anti-symmetric mode in the second waveguide (32) towards the second input port (Pe) and in the third waveguide (33) towards the third input port (Pf) of said guided optical router (40b).

4. The method of optical routing according to claim 3, comprising the following steps:
- detecting a signal representative of a secondary beam (41) having a residual power at the first output port (Pb) of said guided optical router, and
- modifying the length of interaction L in such a way to minimize said residual power of said secondary beam (41).
